(19) Europäisches Patentamt
European Patent Office
Office européen des brevets

(11) EP 4 417 629 A1

(12) EUROPEAN PATENT APPLICATION

(43) Date of publication:
**21.08.2024 Bulletin 2024/34**

(21) Application number: **23156589.6**

(22) Date of filing: **14.02.2023**

(51) International Patent Classification (IPC):
***C08F 2/00*** *(2006.01)* ***C08J 5/18*** *(2006.01)*
***C08L 23/08*** *(2006.01)*

(52) Cooperative Patent Classification (CPC):
(C-Sets available)
**C08L 23/0815; C08F 210/16; C08J 5/18;**
C08J 2323/08; C08L 2203/16; C08L 2205/025;
C08L 2205/035; C08L 2314/02; C08L 2314/06

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **WANG, Jingbo**
**4021 Linz (AT)**
- **BERGER, Friedrich**
**4021 Linz (AT)**
- **ALABRUNE, Arnaud**
**92400 Courbevoie (FR)**
- **POTTER, Elisabeth**
**4021 Linz (AT)**

(74) Representative: **TBK**
**Bavariaring 4-6**
**80336 München (DE)**

# (54) POLYETHYLENE BLEND FOR A FILM LAYER

(57) Polyethylene film layer based on a blend of a high density polyethylene, produced in the presence of a Ziegler-Natta catalyst (znHDPE) and a specific multimodal metallocene catalysed linear low density polyethylene (mLLDPE), with well-balanced properties, especially stiffness/impact balance.

EP 4 417 629 A1

(52) Cooperative Patent Classification (CPC): (Cont.)

C-Sets
**C08F 210/16, C08F 2/001;**
**C08F 210/16, C08F 4/65927;**
**C08L 23/0815, C08L 23/0815, C08L 23/0815,**
**C08L 23/04, C08L 23/04;**
**C08L 23/0815, C08L 23/0815, C08L 23/0815,**
**C08L 23/04, C08L 23/04, C08L 23/04;**
C08F 210/16, C08F 210/08, C08F 2500/05,
C08F 2500/07, C08F 2500/12, C08F 2500/27;
C08F 210/16, C08F 210/08, C08F 2500/05,
C08F 2500/12, C08F 2500/27

## Description

The present invention relates to a polyethylene blend of a high density polyethylene, produced in the presence of a Ziegler-Natta catalyst (znHDPE) and a specific multimodal metallocene catalysed linear low density polyethylene (mLLDPE), which provides films with well-balanced properties, especially stiffness/impact balance.

High standards are nowadays required for packaging materials. Quite often properties are required in the packaging industry, which are conflicting. Typically, high stiffness and toughness are required in parallel, as this leads to less material needed for producing the final product. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry.

Due to the different requirements nowadays multilayer packaging with different type of materials are used, which from one side serve the needs, but from the other side such structures make recycling difficult. Therefore using pure materials is preferred, i.e. a packaging with 'mono-materials', i.e. only polyethylene based polymers, is really appreciated. However, this imposes higher requirement to the performance of materials themselves, a material with balanced performance is therefore highly appreciated.

mLLDPE attracts specific interests due to its excellence balance between cost and performance. The main drawback is that the processability and optics are rather poor. One common way is to blend the mLLDPE with LDPE, however, this is known to worsen other properties, like impact.

Multimodal mLLDPEs and znHDPEs as such are known in the state of the art.

For example WO2022018239 describes a multimodal ethylene copolymer produced in a two-sage polymerization process, the use of the copolymer in film applications and to a film comprising the copolymer of the invention.

WO 2019229209 A1 employs at least a three stage polymerization process, optionally preceded by a prepolymerization step, leading to the production of polymers, specifically high density polyethylene homopolymers, which have an improved balance of processability and mechanical properties, such as ESCR and stiffness, which are used for producing caps and closures.

Also mixtures of 2 different polyethylenes for making blown films are described in the literature. WO1994025523A1 for example describes an ethylene polymer composition, comprising from 10 percent (by weight of the total composition) to 95 percent (by weight of the total composition) of:

(A) at least one homogeneously branched substantially linear ethylene/$\alpha$-olefin interpolymer having:

(i) a density from 0.88 g/cm$^3$ to 0.935 g/cm$^3$,
(ii) a molecular weight distribution (Mw/Mn) from 1.8 to 2.8, (iii) a melt index (I2) from 0.001 grams/10 minutes (g/10 min) to 10 g/10 min; and

(B) from 5 percent (by weight of the total composition) to 90 percent (by weight of the total composition) of at least one heterogeneously branched ethylene polymer having a density from 0.91 g/cm$^3$ to 0.965 g/cm$^3$.

According to the experimental part the ethylene-1-octene copolymers made by solution polymerization are used.

As stated above the recycling of packaging material after their first use is an important topic nowadays. It is much more challenging to recycle packaging films made of different materials, e.g. different plastics, than to recycle mono-material solutions. On the other hand, the use of different materials is sometimes necessary to obtain acceptable properties, like mechanical properties.

Therefore, an objective of the present invention is the provision of a polyethylene based mono-material solution, which provides an improved balance of stiffness and toughness.

The present inventors have found that a blend of a high density polyethylene, produced in the presence of a Ziegler-Natta catalyst (znHDPE), and a specific multimodal metallocene catalysed linear low density polyethylene (mLLDPE) provides films with an improved balance of stiffness and toughness, which have the potential of material reduction for producing the final articles (possible lower film thicknesses) due to the better stiffness/impact balance, but also the possibility that the final articles have lower weight at the same thickness.

## Summary of Invention

The present invention is therefore directed to a polyethylene polyethylene blend comprising

a) 1.0 wt% to 49.0 wt%, based on the total weight of the polyethylene blend, of a multimodal metallocene catalysed linear low density polyethylene (mLLDPE) which consists of an in-situ blend of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density (ISO 1183) in the range of 925 to 965 kg/$m^3$,
a $MFR_2$ (190°C, 2.16 kg, ISO 1133) in the range of 1.0 to 400.0 g/10 min;

the ethylene-1-hexene polymer component (B) has

a density (ISO 1183) in the range of 880 to 915 kg/$m^3$,
a $MFR_2$ (190°C, 2.16 kg, ISO 1133) in the range of 0.001 to 1.0 g/10 min;

whereby the multimodal metallocene catalysed linear low density polyethylene (mLLDPE) has

a density (ISO 1183) in the range of 910 to 925 kg/$m^3$,
a $MFR_2$ (190°C, 2.16 kg, ISO 1133) in the range of 0.1 to 2.5 g/10 min, and

b) 99.0 to 51.0 wt%, based on the total weight of the polyethylene blend, of a multimodal high density polyethylene, produced in the presence of a Ziegler-Natta catalyst (znHDPE), whereby said znHDPE has

a density (ISO 1183) in the range of 945 to 975 kg/$m^3$,
a $MFR_2$ (190°C, 2.16 kg, ISO 1133) in the range of 0.1 to 2.0 g/10 min, and

whereby the blend has

a density (ISO 1183) in the range of 930 to 965 kg/$m^3$,
a $MFR_2$ (190°C, 2.16 kg, ISO 1133) in the range of 0.1 to 1.5 g/10 min, and
a melting temperature (Tm) (measured by DSC as described in the description) in the range of 120 to 135°C.

In an embodiment of the present invention, the ethylene-1-butene polymer component (A) of the multimodal metallocene catalysed linear low density polyethylene (mLLDPE) consists of an ethylene polymer fraction (A-1) and an ethylene polymer fraction (A-2).

In another embodiment of the present invention, the polyethylene blend comprises

a) 1.0 to 20.0 wt%, based on the total weight of the polyethylene blend, of a multimodal metallocene catalysed linear low density polyethylene (mLLDPE), as defined above, and
b) 99.0 to 80.0 wt%, based on the total weight of the polyethylene blend, of a multimodal high density polyethylene, produced in the presence of a Ziegler-Natta catalyst (znHDPE), as defined above;
whereby the blend has
a density (ISO 1183) in the range of 948 to 965 kg/m3,
a MFR2 (190°C, 2.16 kg, ISO 1133) in the range of 0.1 to 1.5 g/10 min, and
a melting temperature (Tm) (measured by DSC as described in the description) in the range of 120 to 135°C.

In yet another embodiment of the present invention, the polyethylene blend comprises

a) 21.0 to 49.0 wt%, based on the total weight of the polyethylene blend, of a multimodal metallocene catalysed linear low density polyethylene (mLLDPE), as defined above, and
b) 79.0 to 51.0 wt%, based on the total weight of the polyethylene blend, of a multimodal high density polyethylene, produced in the presence of a Ziegler-Natta catalyst (znHDPE), as defined above;
whereby the blend has
a density (ISO 1183) in the range of 930 to 947 kg/m3,
a MFR2 (190°C, 2.16 kg, ISO 1133) in the range of 0.1 to 1.5 g/10 min, and
a melting temperature (Tm) (measured by DSC as described in the description) in the range of 120 to 135°C.

Unexpectedly the above defined blend of the invention provides improved balance of stiffness and toughness to films comprising such blends.

The invention is therefore further direct to films comprising the above defined polyethylene blend.

## Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

For the purpose of the present invention the term "consists of an in-situ blend", does not exclude the presence of any additive, which may be added to the mLLDPE, respectively znHDPE. It only refers to the number of polymer components, i.e. polymer component (A) and polymer component (B), respectively polymer component (C) and polymer component (D).

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

Ziegler-Natta catalysed high density polyethylene (znHDPE) is defined in this invention as high density polyethylene, which has been produced in the presence of a Ziegler-Natta catalyst.

Polyethylene polymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

For the purpose of the present invention "metallocene catalysed linear low density polyethylene (mLLDPE) which consists of an in-situ blend of an ethylene-1-butene polymer component (A) and an ethylene-1-hexene polymer component (B)" means that the mLLDPE is produced in an at least 2-stage sequential polymerization process, wherein first component (A) is produced and component (B) is then produced in the presence of component (A) in a subsequent polymerization step, yielding the mLLDPE or vice versa, i.e. first component (B) is produced and component (A) is then produced in the presence of component (B) in a subsequent polymerization step, yielding the mLLDPE.

Term "multimodal" in context of multimodal metallocene catalysed linear low density polyethylene means herein multimodality with respect to melt flow rate (MFR)) of at least the ethylene polymer components (A) and (B), i.e. the ethylene polymer components (A) and (B), have different MFR values. The multimodal metallocene catalysed linear low density polyethylene can have further multimodality between the ethylene polymer components (A) and (B) with respect to one or more further properties, like density, comonomer type and/or comonomer content, as will be described later below.

For the purpose of the present invention "Ziegler-Natta catalysed high density polyethylene (znHDPE) which consists of an in-situ blend of an high density (lower molecular weight) polymer component (C) and an lower density (higher molecular weight) polymer component (D)" means that the znHDPE is produced in an at least 2-stage sequential polymerization process, wherein first component (C) is produced and component (D) is then produced in the presence of component (C) in a subsequent polymerization step, yielding the znHDPE. Higher molecular weight hereby means that component (D) has a higher molecular weight and thus lower $MFR_2$ than component (C).

Lower molecular weight hereby means that component (C) has a lower molecular weight and thus higher $MFR_2$ than component (D).

The term "multimodal" in context of multimodal Ziegler-Natta catalysed high density polyethylene means herein multimodality with respect to melt flow rate (MFR)) of the polymer components (C) and (D), i.e. the polymer components (C) and (D), have different MFR values. The multimodal znHDPE can have further multimodality between the polymer components (C) and (D) with respect to one or more further properties, like density or comonomer content, as will be described later below.

## Detailed description of Invention

The polyethylene blend on which the polyethylene film layer according to the present invention is based comprises a) a multimodal metallocene catalysed linear low density polyethylene (mLLDPE) and b) a multimodal high density polyethylene, which has been produced in the presence of a Ziegler-Natta catalyst (znHDPE).

Thus the blend comprises in general

a) 1.0 wt% to 49.0 wt%, preferably 5.0 wt% to 48.0 wt%, more preferably 10.0 wt% to 47.0 wt% and even more preferably 20.0 wt% to 46.0 wt%, based on the total weight of the polyethylene blend, of the multimodal metallocene

catalysed linear low density polyethylene (mLLDPE) and

b) 99.0 wt% to 51.0 wt%, preferably 95.0 wt% to 52.0 wt%, more preferably 90.0 wt% to 53.0 wt% and even more preferably 80.0 wt% to 54.0 wt%, based on the total weight of the polyethylene blend, of the multimodal high density polyethylene (znHDPE).

As stated above, in one embodiment, i.e. for the blend having a density (ISO 1183) in the range of 948 to 965 $kg/m^3$, preferably in the range of 950 to 960 $kg/m^3$ the blend comprises

a) 1.0 wt% to 20.0 wt%, preferably 3.0 wt% to 18.0 wt%, more preferably 5.0 wt% to 15.0 wt%, based on the total weight of the polyethylene blend, of the multimodal metallocene catalysed linear low density polyethylene (mLLDPE) and

b) 99.0 wt% to 80.0 wt%, preferably 97.0 wt% to 82.0 wt%, more preferably 95.0 wt% to 85.0 wt%, based on the total weight of the polyethylene blend, of the multimodal high density polyethylene (znHDPE).

In the further embodiment, i.e. for the blend having a density (ISO 1183) in the range of 930 to 947 $kg/m^3$, preferably 935 zo 945 $kg/m^3$ the blend comprises

a) 21.0 wt% to 49.0 wt%, preferably 25.0 wt% to 48.0 wt%, more preferably 30.0 wt% to 47.0 wt%, based on the total weight of the polyethylene blend, of the multimodal metallocene catalysed linear low density polyethylene (mLLDPE) and

b) 79.0 to 51.0 wt%, preferably 75.0 wt% to 52.0 wt%, more preferably 70.0 wt% to 53.0 wt%, based on the total weight of the polyethylene blend, of the multimodal high density polyethylene (znHDPE).

In another embodiment the blend consists of a) and b) only, thus the total amounts of a) + b) summing up to 100 wt%.

*Ad multimodal metallocene catalysed linear low density polyethylene (mLLDPE)*

The multimodal metallocene catalysed linear low density polyethylene (mLLDPE) is referred herein as "multimodal", since the ethylene-1-butene polymer component (A), optionally including ethylene polymer fractions (A-1) and (A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The multimodal metallocene catalysed linear low density polyethylene (mLLDPE) consists of an in-situ blend of

(i) 30.0 to 70.0 wt% of an ethylene-1-butene polymer component (A), and

(ii) 70.0 to 30.0 wt% of an ethylene-1-hexene polymer component (B).

The amount of (A) and (B) add up to 100.0 wt%.

In an embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same.

The ethylene polymer fractions (A-1) and (A-2) may have a $MFR_2$ (190°C, 2.16 kg, ISO 1133) in the range of 1.0 to 1000.0 g/10 min, preferably of 2.0 to 550.0 g/10 min, more preferably of 3.0 to 250.0 g/10 min, even more preferably of 3.5 to 80.0 g/10 min.

The $MFR_2$ of the fractions (A-1) and (A-2) may be the same or may be different. In case the $MFR_2$ is different for the two fractions, it is preferred that the $MFR_2$ of fraction (A-2) is higher than the $MFR_2$ of fraction (A-1).

The $MFR_2$ of the ethylene polymer components (A) and (B) are different from each other. The ethylene polymer component (A) has a $MFR_2$ (190°C, 2.16 kg, ISO 1133) in the range of 1.0 to 400 g/10 min, preferably of 2.0 to 250.0 g/10 min, more preferably of 3.0 to 150.0 g/10 min, even more preferably of 3.5 to 80.0 g/10 min.

The ethylene polymer component (B) has a $MFR_2$ (190°C, 2.16 kg, ISO 1133) in the range of 0.001 to 1.0 g/10 min, preferably of 0.005 to 0.9 g/10 min, more preferably of 0.008 to 0.8 g/10 min and even more preferably of 0.01 to 0.7 g/10 min.

The $MFR_2$ (190°C, 2.16 kg, ISO 1133) of the multimodal metallocene catalysed linear low density polyethylene

(mLLDPE) is in the range of 0.1 to 2.5 g/10 min, preferably 0.2 to 2.0 g/10 min, more preferably 0.3 to 1.8 g/10 min and even more preferably 0.4 to 1.5.

The multimodal metallocene catalysed linear low density polyethylene (mLLDPE) has a ratio of $MFR_{21}$ (190°C, 21.6 kg, ISO 1133) to $MFR_2$ (190°C, 2.16 kg, ISO 1133), $MFR_{21}/MFR_2$, in the range of 15 to 60, preferably 18 to 55, more preferably 20 to 50 and even more preferably 20 to 45.

Naturally, in addition to multimodality with respect to, i.e. difference between, the $MFR_2$ of ethylene polymer components (A) and (B), the multimodal metallocene catalysed linear low density polyethylene (mLLDPE) of the invention can also be multimodal e.g. with respect to one or both of the two further properties:
multimodality with respect to, i.e. difference between,

- the comonomer content(s) present in the ethylene polymer components (A) and (B); and/or
- the density of the ethylene polymer components (A) and (B).

Preferably, the multimodal metallocene catalysed linear low density polyethylene (mLLDPE) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula: Comonomer content (wt%) in component B = (comonomer content (wt%) in final product - (weight fraction of component A * comonomer content (wt%) in component A)) / (weight fraction of component B)

The total amount of 1-butene, based on the multimodal metallocene catalysed linear low density polyethylene (mLLDPE), is preferably in the range of from 0.1 to 1.5 wt%, preferably 0.2 to 1.2 wt% and more preferably 0.2 to 1.0 wt%.

The total amount of 1-hexene, based on the multimodal metallocene catalysed linear low density polyethylene (mLLDPE), is preferably in the range of 2.0 to 15.0 wt%, preferably 4.0 to 13.0 wt% and more preferably 5.0 to 12.0 wt%.

Even more preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 925 to 965 kg/$m^3$, preferably of 930 to 955 kg/$m^3$, more preferably of 935 to 950 kg/$m^3$ and the density of the ethylene polymer component (B) is in the range of 880 to 915 kg/$m^3$, preferably of 885 to 910 kg/$m^3$ and more preferably of 888 to 905 kg/$m^3$.

The polymer fractions (A-1) and (A-2) may have a density in the range of 925 to 965 kg/$m^3$, preferably of 930 to 955 kg/$m^3$, and more preferably of 935 to 950 kg/$m^3$.

The density of polymer fraction (A-1) and (A-2) may be the same or may be different from each other.

The density of the multimodal metallocene catalysed linear low density polyethylene (mLLDPE) is in the range of 910 to 925 kg/$m^3$, preferably of 911 to 923 kg/$m^3$ and more preferably of 912 to 922 kg/$m^3$.

More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

It is within the scope of the invention, that, if component (A) consists of two fractions, the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 48.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 52.0 wt%.

The multimodal metallocene catalysed linear low density polyethylene (mLLDPE), can be produced in a 2-stage process, preferably comprising a slurry reactor (loop reactor), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal

metallocene catalysed linear low density polyethylene (mLLDPE).

In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The second loop reactor is thereby connected in series to a gas phase reactor (GPR), so that the first ethylene polymer component (A) leaving the second slurry reactor is fed to the GPR to produce a multimodal polyethylene copolymer.

Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.

A suitable process is the Borstar PE process or the Borstar PE 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the first ethylene polymer component (A).

*Catalyst*

The multimodal metallocene catalysed linear low density polyethylene (mLLDPE) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

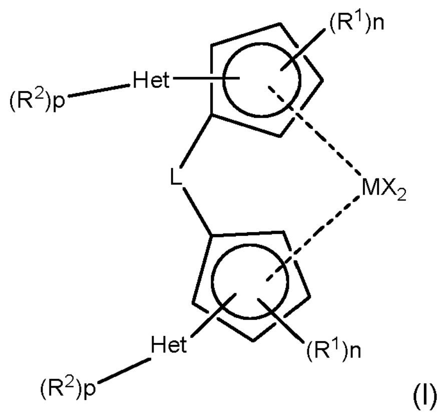

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -Si(R)$_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

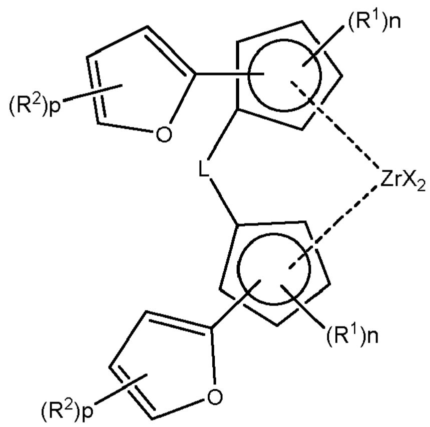

(I´)

wherein each X is independently a halogen atom, a $C_{1-6}$-alkyl group, $C_{1-6}$-alkoxy group, phenyl or benzyl group;
L is a $Me_2$Si-;
each $R^1$ is the same or different and is a $C_{1-6}$-alkyl group, e.g. methyl or t-Bu;
each n is 1 to 2;
$R^2$ is a -Si(R)$_3$ alkyl group; each p is 1;
each R is $C_{1-6}$-alkyl or phenyl group.

Highly preferred complexes of formula (I) are

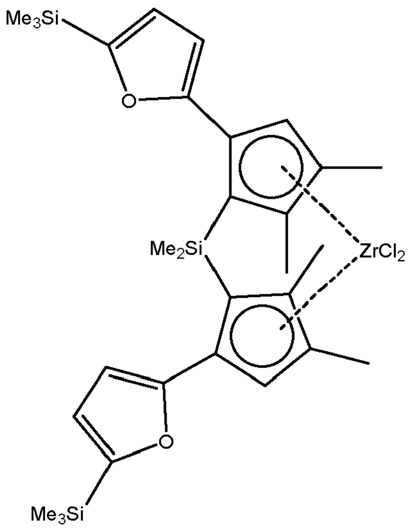
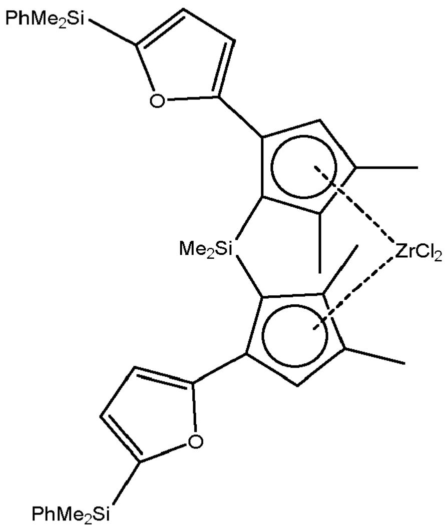
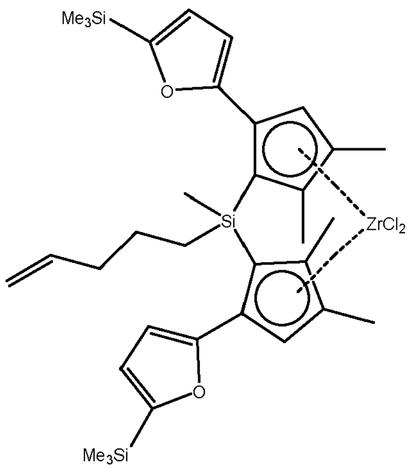
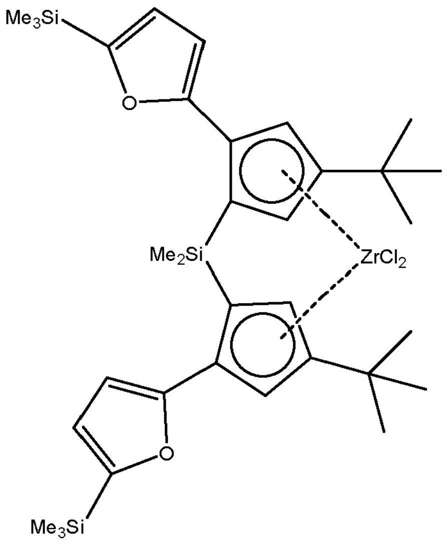

Most preferably the complex dimethylsilanediylbis[2-(5-trimethylsilylfuran-2-yl)-4,5-dimethylcyclopentadien-1-yl] zirconium dichloride is used.

In another embodiment the metallocene complex is a compound of formula (II)

$$(Cp)_2RnMX_2 \qquad (II)$$

wherein:

- each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
- R is a bridge of 1-7 atoms, e.g. 1 to 2 atoms;
- X is a sigma ligand;
- n is 0 or 1;
- M is a transition metal of Group 4, e.g. Ti, Zr or Hf, especially Zr or Hf.

In this embodiment, the metallocene complex is a compound of formula (II)

$$(Cp)_2RnMX_2 \qquad (II)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, -SiR"3, -OSiR"3, -SR", -PR"2, OR" or-NR"2,

each R" is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of -NR"2, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. -SiR22-, wherein each R2 is independently C1-C20-alkyl, C3-12-cycloalkyl, C6-C20-aryl or tri(C1-C20-alkyl)silyl- residue, such as trimethylsilyl;

M is a transition metal of Group 4, e.g. Ti, Zr or Hf, especially Zr or Hf;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"3, -SiR"3, -OSiR"3, -NR"2 or -CH2-Y, wherein Y is C6-C20-aryl, C6-C20-heteroaryl, C1-C20-alkoxy, C6-C20-aryloxy, NR"2, -SR", -PR"3, -SiR"3, or -OSiR"3;

each of the above mentioned ring moieties alone or as a part of another moiety as the substituent for Cp, X, R" or R2 can further be substituted e.g. with C1-C20-alkyl which may contain Si and/or O atoms;

n is 0 or 1.

Suitably, in each X as -CH2-Y, each Y is independently selected from C6-C20-aryl, NR"2, - SiR"3 or -OSiR"3. Most preferably, X as -CH2-Y is benzyl. Each X other than -CH2-Y is independently halogen, C1-C20-alkyl, C1-C20-alkoxy, C6-C20-aryl, C7-C20-arylalkenyl or - NR"2 as defined above, e.g. -N(C1-C20-alkyl) 2.

Preferably, each X is halogen, methyl, phenyl or -CH2-Y, and each Y is independently as defined above.

Cp is preferably cyclopentadienyl, indenyl, tetrahydroindenyl or fluorenyl, optionally substituted as defined above. More preferably Cp is a cyclopentadienyl or indenyl.

In a suitable subgroup of the compounds of formula (II), each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), -OSiR"3, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si=, (methylcyclohexyl)silyl= or (trimethylsilylmethyl)Si=;

n is 0 or 1.

Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -SiMe2. The preparation of the metallocenes can be carried out according or analogously to the methods known from the literature and is within skills of a person skilled in the field. Thus for the preparation see e.g. EP-A-129 368, examples of compounds wherein the metal atom bears a -NR"2 ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

A preferred metallocene complex of formula (II) is bis(1-methyl-3-n-butylcyclopentadienyl) zirconium (IV) chloride

Preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts

comprising Al or B are well known and can be used here. The use of aluminoxanes (e.g. MAO) or boron based cocatalysts (such as borates) is preferred.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

*Ad multimodal high density polyethylene (znHDPE)*

The polyethylene blend according to the present invention comprises as component b) a znHDPE; whereby said znHDPE has a density determined according to ISO 1183 in the range of 945 to 975 kg/$m^3$ and a $MFR_2$ (190°C, 2.16 kg, ISO 1133) in the range of 0.1 to 2.0 g/10 min.

The density of the znHDPE is preferably in the range of 950 to 972 kg/$m^3$, more preferably of 952 to 970 kg/$m^3$, even more preferably of 954 to 968 kg/$m^3$ and most preferably of 958 to 965 kg/$m^3$.

Preferably, the znHDPE has a $MFR_2$ in the range of 0.2 to 1.8 g/10 min, more preferably in the range of 0.3 to 1.5 g/10 min and most preferably in the range of 0.4 to 1.0 g/ 10 min.

Preferably, the znHDPE has an $MFR_{21}$ (190°C, 21.6 kg, ISO 1133) in the range of 30 to 100 g/10 min, more preferably in the range of 35 to 80 g/10 min and most preferably in the range of 40 to 60 g/10 min.

The znHDPE preferably has a ratio of to $MFR_2$ ($FRR_{21/2}$) in the range of 45 to 80, more preferably in the range of 50 to 75 and most preferred in the range of 55 to 70.

In an embodiment of the present invention, the znHDPE preferably has a number average molecular weight Mz in the range of 300,000 to 1,000,000 g/mol, more preferably of 500,000 to 900,000 g/mol and most preferred of 550,000 to 750,000 g/mol. Likewise, the znHDPE preferably has a weight average molecular weight Mw in the range of 80,000 to 200,000 g/mol, more preferably of 90,000 to 150,000 g/mol, and most preferably of 100,000 to 140,000 g/mol. The znHDPE preferably has a molecular weight distribution Mz/Mw of from 1 to 10, preferably from 3 to 7, and most preferably from 4 to 5.5.

Preferably, the znHDPE is an ethylene homopolymer or an ethylene copolymer.

By ethylene homopolymer is meant a polymer having mainly ethylene monomer units. Such polymer may contain up to 1 mol% comonomer units, due to the fact that during polymerization some impurities may be present. Preferably, the homopolymer contains no comonomer units. By ethylene copolymer is meant a polymer the majority by weight of which derives from ethylene monomer units (i.e. at least 50.0 wt% ethylene relative to the total weight of the copolymer). The comonomer contribution preferably is up to 10 % by mol, more preferably up to 5 % by mol.

The comonomer can be an alpha-olefin having 4 to 12 carbon atoms, e.g. 1-butene, 4-methyl-1-pentene, 1-hexene, 1-octene, 1-decene, preferably 1-butene, 1-hexene or 1-octene, most preferably 1-butene.

The multimodal znHDPE used according to the present invention comprises at least

(i) 30 to 70 wt%, relative to the total weight of the multimodal znHDPE, of a polyethylene component (C) with a density (ISO 1183) in the range of 955 to 980 kg/$m^3$ and an $MFR_2$ (190°C, 2.16 kg, ISO 1133) in the range of 50 to 1000 g/10 min; and

(ii) 30 to 70 wt%, relative to the total weight of the multimodal znHDPE, of a polyethylene component (D) with a density (ISO 1183) in the range of 935 to 965 kg/$m^3$ and an $MFR_2$ (190°C, 2.16 kg, ISO 1133) in the range of 0.0001 to 0.5 g/10 min.

The znHDPE used in the present invention is multimodal and therefore comprises at least two components.

In one embodiment the znHDPE is preferably bimodal, in another embodiment the znHDPE is trimodal.

The znHDPE of the invention most preferably comprises an in-situ blend of

(i) a high density polymer component (C) being a lower molecular weight ethylene homo- or copolymer component, and

(ii) a lower density component (D) being a higher molecular weight ethylene homo- or copolymer component.

In one particularly preferable embodiment, the znHDPE consists of components (C) and (D).

The weight ratio of component (C) to component (D) in the multimodal znHDPE is in the range of 30:70 to 70:30, preferably 35:65 to 65:35, more preferably 40:60 to 60:40. In some embodiments the ratio may be 35 to 50 wt% of component (C) and 50 to 65 wt% of component (D), such as 40 to 50 wt% of component (C) and 50 to 60 wt% of component (D), wherein the wt% values are relative to the total weight of the multimodal znHDPE.

In a particularly preferred embodiment, the wt% values for components (C) and (D) add up to 100 %.

Embodiment (I)

In one preferred embodiment, i.e. embodiment (I), the multimodal znHDPE is a bimodal znHDPE.

In this embodiment, the high density polymer component (C) preferably has a $MFR_2$ of 100 to 900 g/10min, more preferably of 150 to 800 g/10min, even more preferably of 200 to 600 g/10min and still more preferably of 250 to 500 g/10 min.

The density of the high density polymer component (C) of this embodiment is preferably in the range of 960 to 980 kg/m$^3$, more preferably of 965 to 978 kg/m$^3$ and even more preferably of 968 to 975 kg/m$^3$.

The lower density polymer component (D) of this embodiment preferably has a $MFR_2$ of 0.0005 to 0.5 g/10min, more preferably of 0.0008 to 0.1 g/10min and even more preferably of 0.001 to 0.05 g/10 min and preferably a density in the range of 940 to 955 kg/m$^3$ and more preferably of 945 to 952 kg/m$^3$.

The multimodal HDPE of embodiment (I) may be produced by polymerization using conditions which create a multimodal (i.e. bimodal) polymer product using a Ziegler Natta catalyst system.

Typically, a two or more stage, i.e. multistage, polymerization process is used with different process conditions in the different stages or zones (e.g. different temperatures, pressures, polymerization media, hydrogen partial pressures, etc.). Preferably, the multimodal (e.g. bimodal) HDPE is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions (e.g. at least components (A) and (B)) is produced by producing the at least two polymer components in separate reaction stages, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc..

The multimodal HDPE of embodiment (I) is a bimodal HDPE prepared in a two-stage polymerization process.

The first polymerization stage produces the ethylene homopolymer, which is subsequently fed to the second polymerization stage. The second polymerization stage then produces a further ethylene polymer in the presence of the ethylene homopolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amounts of methane, ethane and/or butane.

The temperature in the first polymerization stage is preferably from 60 to 100°C, preferably from 80 to 100°C. The pressure is generally from 1 to 150 bar, preferably from 40 to 80 bar. The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the MFR2 of the resultant polymer. The amount of hydrogen needed to reach the desired MFR depends on the catalyst used and the polymerization

conditions.

In the second polymerization stage, ethylene is polymerized optionally together with at least one alpha-olefin comonomer, in the presence of the catalyst and the ethylene polymer produced in the first polymerization stage. It will thus be appreciated that the second polymerization stage generates an ethylene polymer, which combines with the ethylene polymer from the first polymerization stage, to form the bimodal HDPE of embodiment (I) of the present invention. Preferable comonomers are discussed hereinbefore, however it is noted that it is particularly preferable if the at least one alpha-olefin is 1-butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

The split between the first polymerization stage and the second polymerization stage (i.e. between the slurry polymerization and the gas phase polymerization) is typically 30:70 to 70:30, more preferably 35:65 to 65:35, most preferably 40:60 to 60:40.

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 45 to 75°C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount, which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases, it is necessary to introduce so much cocatalyst into the prepolymerization stage that a sufficient polymerization reaction is obtained therein.

It is understood within the scope of the invention, that the amount of polymer produced in the prepolymerization typically lies within 1-5 wt% in respect to the final multimodal HDPE.

As stated above, the polymerization for embodiment (I) is conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a MgCl2 based support. Preferably, the support is silica or a MgCl2 based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched

alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors. In the production of the multimodal HDPE of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

Embodiment (II)

In another preferred embodiment, i.e. embodiment (II), the znHDPE is a trimodal znHDPE.

In this embodiment (II) the znHDPE used according to the present invention consists of an in-situ blend of

(iii) 35.0 to 60.0 wt%, preferably 38.0 to 52.0 wt%, more preferably 40.0 to 48.0 wt%, relative to the znHDPE, of a high density polymer component (C) and

(iv) 65.0 to 40.0 wt%, preferably 62.0 to 48.0 wt%, more preferably 60.0 to 52.0 wt%, relative to the znHDPE, of a lower density polymer component (D).

The high density polymer component (C) furthermore consists of

30.0 to 70.0 wt%, preferably 35.0 to 60.0 wt%, more preferably 38.0 to 48.0 wt%, relative to the polymer component (C), of a high density fraction (C-1) and

70.0 to 30.0 wt%, preferably 65.0 to 40.0 wt%, more preferably 62.0 to 52.0 wt%, relative to the polymer component (C) of a high density fraction (C-2).

<u>Ad high density polymer component (C):</u>

The density of the high density component (C) is in the range of 950 to 980 kg/$m^3$, preferably of 960 to 978 kg/$m^3$ and more preferably of 968 to 975 kg/$m^3$.

The $MFR_2$ of the high density component (C) is in the range of 150 to 1000 g/10 min, preferably in the range of 250 to 800 g/10 min and more preferably in the range of 300 to 700 g/10 min.

The high density fraction (C-1) is a polyethylene homo- or copolymer, preferably a polyethylene copolymer, more preferably an ethylene-1-butene copolymer.

The density of the high density fraction (C-1) is in the range of 950 to 980 kg/m$^3$, preferably of 955 to 975 kg/m$^3$ and more preferably of 958 to 970 kg/m$^3$.

The $MFR_2$ of the high density fraction (C-1) is in the range of 10 to 400 g/10 min, preferably in the range of 50 to 350 g/10 min and more preferably in the range of 150 to 300 g/10 min.

The high density fraction (C-2) is a polyethylene homo- or copolymer, preferably a polyethylene copolymer, more preferably an ethylene-1-butene copolymer.

The density of the high density fraction (C-2) is in the range of 950 to 980 kg/m$^3$, preferably of 960 to 978 kg/m$^3$ and more preferably of 970 to 976 kg/m$^3$.

The $MFR_2$ of the high density fraction (C-2) is in the range of 100 to 2000 g/10 min, preferably in the range of 250 to 1600 g/10 min and more preferably in the range of 400 to 1300 g/10 min, like 450 to 800 g/10 min.

The $MFR_2$ of the high density fraction (C-2) is higher than the $MFR_2$ of the high density fraction (C-1).

The density of fraction (C-2) is higher than or the same as the density of the high density fraction (C-1).

<u>Ad lower density polymer component (D)</u>

The density of the lower density polymer component (D) is in the range of 940 to 970 kg/m$^3$, preferably of 945 to 965 kg/m$^3$ and more preferably of 946 to 960 kg/m$^3$.

The density of the polymer component (D) is lower than the density of the polymer component (C).

In a preferred embodiment of the invention, the difference between the density of the polymer component (C) and the density of the polymer component (D) is between 5.0 and 35.0 kg/m$^3$, more preferably between 10.0 and 32.0 kg/m$^3$, and most preferably between 15.0 and 30.0 kg/m$^3$.

The $MFR_2$ of the lower density polymer component (D) is in the range of 0.0001 to 0.5 g/10 min, preferably in the range of 0.0008 to 0.1 g/10 min and more preferably in the range of 0.001 to 0.05 g/10 min.

*Process for preparing the trimodal znHDPE*

The trimodal Ziegler-Natta catalysed high density polyethylene (znHDPE), can be produced with a 3-stage process. A 3-stage process as used herein is a process which makes use of at least three reactors, two for producing a lower molecular weight component and a third for producing a higher molecular weight component.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

The 3-stage process can be any combination of liquid phase, slurry phase and gas phase processes.

In the preferred 3-stage process, the lower molecular weight component, i.e. the high density polymer component (C) consisting of fractions (C-1) and (C-2) and the higher molecular weight component, i.e. the lower density polymer component (D) are produced in different polymerization steps, in any order.

The low molecular weight high density fraction (C-1) can be prepared in the first polymerization step, the low molecular weight high density fraction (C-2) can be prepared in the second polymerization step, and the high molecular weight lower density polymer component (D) in the third polymerization step. This can be referred to as the normal mode and is preferred.

Preferably, the multistage process of the present invention is a slurry phase-slurry phase-gas phase process. Details related to slurry phase and gas phase polymerization are described above for the bimodal znHDPE.

In a preferred embodiment of the invention the fraction (C-1) is produced first, the fraction (C-2) is produced in the presence of fraction (C-1), and component (D) is produced in the presence of combined fractions (C-1) and (C-2), i.e. in the presence of component (C).

According to a preferred embodiment of the invention, the process comprises a first slurry-phase polymerization stage, a second slurry-phase polymerization stage and a gas-phase polymerization stage. One suitable reactor configuration comprises two slurry reactors, preferably loop reactors, and one gas-phase reactor.

The polymerization steps may be preceded by a pre-polymerization step as described above for the polymerization of the bimodal znHDPE.

A suitable process is the Borstar PE 3G process.

The trimodal znHDPE used according to the present invention is produced in the presence of a Ziegler-Natta (ZN) catalyst, as described above for the bimodal znHDPE

*Polyethylene blend*

The polyethylene blend has a density determined according to ISO 1183 in the range of 930 to 965 kg/m$^3$, preferably in the range of 932 to 960 kg/m$^3$ and more preferably in the range of 935 to 958 kg/m$^3$.

The $MFR_2$ (190°C, 2.16 kg, ISO 1133) of the blend is in the range of 0.1 to 1.5 g/10 min, preferably in the range of 0.3 to 1.3 g/10 min and more preferably in the range of 0.4 to 1.1 g/10 min.

The melting temperature (Tm) (measured by DSC as described in the experimental part) of the blend is in the range of 120 to 135°C, preferably in the range of 125 to 132°C.

The inventive blend may further have a crystallization temperature (Tc) (measured by DSC as described in the experimental part) in the range of 110 to 125°C, preferably in the range of 114 to 120°C.

As mentioned above, the polyethylene blend according to the present invention provides an improved balance of stiffness and toughness to films comprising such blends.

The invention is therefore further direct to films comprising the above defined polyethylene blend.

**Film**

The film of the invention comprises at least one layer comprising the above defined polyethylene blend. The film can be a monolayer film comprising the above defined polyethylene blend or a multilayer film, wherein at least one layer comprises the above defined polyethylene blend. The terms "monolayer film" and multilayer film" have well known meanings in the art.

The films are preferably produced by any conventional film extrusion procedure known in the art including cast film and blown film extrusion. Most preferably, the film is a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or biaxially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm. Films of the invention are preferably not stretched in the machine or transverse or biaxial direction.

Films according to the present invention have good stiffness (tensile modulus measured on a 40 μm monolayer test blown film according to ISO 527-3), i.e. > 300 MPa (in both directions). Thus, the films comprising the above defined polyethylene blend in addition have a tensile modulus (measured on a 40 μm monolayer test blown film according to ISO 527-3) in machine (MD) as well as in transverse (TD) direction in the range of > 300 MPa to 1500 MPa, preferably of 400 MPa to 1300 MPa, more preferably of 500 to 1200 MPa.

In one embodiment of the present invention, the optomechanical ability (OMA) according to formula (III):

$$OMA = \frac{Tensile\ Modulus\ (MD)[MPa] * DDI\ [g]}{Haze\ (40\ \mu m)[\%]}$$

of 40 μm test blown film is in the range of 800 [MPa*g/%] up to 10000 [MPa*g/%], preferably in the range of from 1000 [MPa*g/%] up to 8000 [MPa*g/%], more preferably in the range of from 2000 [MPa*g/%] up to 6500 [MPa*g/%], wherein the Tensile Modulus in machine direction is measured according to ISO 527-3 at 23°C on 40 μm test blown films , DDI is the dart-drop impact strength determined according to ISO 7765 on a 40 μm test blown film and haze is measured according to ASTM D1003 on a 40 μm test blown film.

In view of the present invention, optomechanicalabilty (OMA) is understood as the ratio of mechanical (especially DDI and tensile (MD)) behaviour, to optical performance, namely haze, wherein the mechanical properties are targeted to be as high as possible and the optical performance in the sense of haze is desired to be as low as possible.

For the embodiment of the high density blend, i.e. for the blend having a density (ISO 1183) in the range of 948 to 965 kg/m$^3$, the optomechanical ability (OMA) according to formula (III) of 40 μm test blown film is in the range of 800 [MPa*g/%] up to 3000 [MPa*g/%], preferably in the range of from 900 [MPa*g/%] up to 2500 [MPa*g/%], more preferably in the range of from 1000 [MPa*g/%] up to 2000 [MPa*g/%], wherein the Tensile Modulus in machine direction is measured according to ISO 527-3 at 23°C on 40 μm test blown films , DDI is the dart-drop impact strength determined according to ISO 7765 on a 40 μm test blown film and haze is measured according to ASTM D1003 on a 40 μm test

blown film.

In the further embodiment of the medium density blend, i.e. for the blend having a density (ISO 1183) in the range of 930 to 947 kg/m$^3$, the optomechanical ability (OMA) according to formula (III) of 40 $\mu$m test blown film is in the range of 2000 [MPa*g/%] up to 10000 [MPa*g/%], preferably in the range of from 2500 [MPa*g/%] up to 8000 [MPa*g/%], more preferably in the range of from 3000 [MPa*g/%] up to 6500 [MPa*g/%], wherein the Tensile Modulus in machine direction is measured according to ISO 527-3 at 23°C on 40 $\mu$m test blown films , DDI is the dart-drop impact strength determined according to ISO 7765 on a 40 $\mu$m test blown film and haze is measured according to ASTM D1003 on a 40 $\mu$m test blown film.

The inventive films are fully recyclable and thus improves sustainability, as it is in the most preferred embodiment a "100% PE" solution with no other polymer than ethylene based polymers being present.

In another embodiment the inventive film contains at least 90 wt% of PE blen, more preferably 95 to 99 wt% of PE blend (difference to 100 wt% can be other polymers than PE), and is thus also suitable for being recycled.

The films according to the present invention are highly useful for being used in various packaging applications, wherein applications related to food packaging are preferred. Furthermore the films according to the present invention may be used as a layer in multilayer polyethylene based blown films, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2) (respectively Component D and fraction (C-2)*

$$logA = x \cdot logB + (1 - x) \cdot logC$$

$$C = 10^\wedge \frac{(logA - x.logB)}{(1 - x)}$$

*For Component B* (respectively *Component D):*

B = $MFR_2$ of Component (A) (respectively (C))
C = $MFR_2$ of Component (B) (respectively (D))
A = final $MFR_2$ of multimodal metallocene catalysed linear low density polyethylene (mLLDPE) (respectively znHDPE)
X = weight fraction of Component (A) (respectively (C))

*For Fraction (A-2)* (respectively fraction (C-2)):

B = $MFR_2$ of 1$^{st}$ fraction (A-1) (respectively (C-1)
C = $MFR_2$ of 2$^{nd}$ fraction (A-2) (respectively (C-2)
A = final $MFR_2$ (mixture) of loop polymer (= Component (A) (respectively Component (C))

X = weight fraction of the 1st fraction (A-1) (respectively fraction (C-1))

**Density**

Density of the polymer was measured according to ISO 1183-1 and ISO1872-2 for sample preparation.

**The melting temperature Tm, crystallization temperature Tc**

were measured with a TA Instruments Q2000 differential scanning calorimetry device (DSC) according to ISO 11357/3 on 5 to 10 mg samples. Crystallization and melting temperatures were obtained in a heat/cool/heat cycle with a scan rate of 10 °C/min between 30 °C and 180°C. Melting and crystallization temperatures were taken as the peaks of the endotherms and exotherms in the cooling cycle and the second heating cycle respectively.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal ($\delta$+) at 30.00 ppm.

The amount of ethylene was quantified using the integral of the methylene ($\delta$+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*$B2 sites at 38.3 ppm accounting for the number of reporting sites per comonomer:

$$B = I_{*B2}$$

The amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the $_*$B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H\ [mol\%] = 100 * fH$$

The weight percent comonomer incorporation is calculated from the mole fraction:

$$B\ [wt\%] = 100 * ( fB * 56.11) / ( (fB * 56.11) + (fH * 84.16) + ((1-(fB + fH)) * 28.05) )$$

$$H\ [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382. Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239

Griffin, J.M., Tripon, C., Samoson, A., Filip, C., and Brown, S.P., Mag. Res. in Chem. 2007 45, S1, S198

Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443

Busico, V., Cipullo, R., Monaco, G., Vacatello, M., Segre, A.L., Macromoleucles 30 (1997) 6251

Zhou, Z., Kuemmerle, R., Qiu, X., Redwine, D., Cong, R., Taha, A., Baugh, D. Winniford, B., J. Mag. Reson. 187 (2007) 225

Busico, V., Carbonniere, P., Cipullo, R., Pellecchia, R., Severn, J., Talarico, G., Macromol. Rapid Commun. 2007, 28, 1128

Resconi, L., Cavallo, L., Fait, A., Piemontesi, F., Chem. Rev. 2000, 100, 1253


**Molecular weight properties**

Molecular weight averages (Mz, Mw and Mn), Molecular weight distribution (MWD) and its broadness, described by polydispersity index, PDI=Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i\ x\ M_i)}{\sum A_i}$$

$$M_z = \frac{\sum_{i=1}^{N} (A_i\ x\ M_i^2)}{\sum (A_i / M_i)}$$

For a constant elution interval $\Delta Vi$, where Ai and Mi are the chromatographic peak slice area and polyolefin molecular weight (MW).

A PolymerChar GPC instrument, equipped with infrared (IR) detector was used with 3x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 to 11500 kg/mol. Mark Houwink constants used for PS,

PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**Dart drop strength (DDI): Impact resistance by free-falling dart method**

The DDI was measured according to ISO 7765-1:1988 / Method A from the films (non-oriented films and laminates) as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

*Standard conditions:*

Conditioning time: > 96 h
Test temperature: 23 °C
Dart head material: phenolic
Dart diameter: 38 mm
Drop height: 660 mm

*Results:*

Impact failure weight - 50% [g]

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

**Haze**

Haze was determined according to ASTM D 1003-00 on film samples prepared as described under the Film Sample preparation with film thickness of 40 μm.

**Film sample preparation**

The test films consisting of the inventive blend and respective comparative films of 40 μm thickness, were prepared using a Collin blown film line. Film samples were produced with BUR 1:2.5 (melt temperature: 210°C, uptake speed: 7 m/min).

The blends were prepared directly in the line.

**Examples:**

**Cat.Example: Catalyst preparation (CAT1 - for mLLDPE1 and mLLDPE2)**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition,

stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Cat.Example: Catalyst preparation (CAT2 for mLLDPE3)**

As catalyst CAT2 an alumoxane containing, supported catalyst containing metallocene bis(1-methyl-3-n-butylcyclopentadienyl) zirconium (IV) chloride with enhanced ActivCat® activator technology from Grace was used.

**Polymerization of mLLDPE for IEs:**

Borstar pilot plant with a 3-reactor set-up (loop1 - loop2 - GPR 1) and a prepolymerization loop reactor. mLLDPE was produced by using the polymerization conditions as given below.

**Table 1:** Polymerization conditions for mLLDPE1-3

| | mLLDPE1 | mLLDPE2 | mLLDPE3 |
|---|---|---|---|
| **Prepoly reactor** | | | |
| Catalyst | CAT1 | CAT1 | CAT2 |
| Catalyst feed (g/h) | 34 | 35 | 19 |
| Temp. (°C) | 50 | 50 | 50 |
| Press. (kPa) | 5621 | 5639 | 5712 |
| C2 (kg/h) | 4.0 | 4.0 | 4.0 |
| H2(g/h) | 0.0 | 0.04 | 0.04 |
| C4 (g/h) | 93.7 | 81.9 | 169.6 |
| Split (wt%) | 3.6 | 3.4 | 3.2 |
| **loop 1 Fraction (A-1)** | | | |
| Temp. (°C) | 85 | 85 | 85 |
| Press. (kPa) | 5534 | 5544 | 5546 |
| C2 conc. (mol%) | 4.3 | 3.5 | 3.8 |
| H2/C2 ratio (mol/kmol) | 0.89 | 0.41 | 0.29 |
| C4/C2 ratio (mol/kmol) | 77.9 | 41.0 | 59.3 |
| Split (wt%) | 18.4 | 17.6 | 20.1 |

| | | | |
|---|---|---|---|
| Density (kg/m3) of loop 1 material (fraction (A-1)) | 939.4 | 941.0 | 939.0 |
| MFR2 (g/10 min) of loop 1 material (fraction (A-1)) | 35.0 | 5.0 | 5.85 |
| **loop 2 Fraction (A-2)** | | | |
| Temp. (°C) | 85 | 85 | 85 |
| Press. (kPa) | 5349 | 5325 | 5354 |
| C2 conc. (mol%) | 4.3 | 3.5 | 3.7 |
| H2/C2 ratio (mol/kmol) | 0.7 | 0.6 | 0.1 |
| C4/C2 ratio (mol/kmol) | 50.0 | 29.0 | 75.6 |
| Split (wt%) | 19.8 | 20.4 | 22.0 |
| Density (kg/m$^3$) after loop 2 (component (A)) | 940.9 | 940.7 | 942.0 |
| $MFR_2$ (g/10 min) after loop 2 (component (A)) | 46.0 | 5.8 | 9.0 |
| $MFR_2$ (g/10 min) of loop 2 material (fraction (A-2)) | 62.6 | 6.8 | 14.1 |
| Density (kg/m$^3$) of loop 2 material (fraction (A-2)) | 942.6 | 941.0 | 946.0 |
| **GPR** | | | |
| Temp. (°C) | 75 | 75 | 75 |
| Press. (kPa) | 2000 | 2000 | 2000 |
| H2/C2 ratio (mol/kmol) | 0.72 | 1.18 | 0.10 |
| C6/C2 ratio (mol/kmol) | 10.25 | 14.5 | 33.69 |
| Split (wt%) | 58.3 | 58.6 | 54.7 |
| $MFR_2$ (g/10 min) of GPR material (Component (B)) | 0.04 | 0.5 | 0.10 |
| Density (kg/m$^3$) of GPR material (Component (B)) | 898.9 | 891.0 | 900.0 |

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 2:** Material properties of mLLDPEs for IEs

| Material | mLLDPE1 | mLLDPE2 | mLLDPE3 |
|---|---|---|---|
| $MFR_2$ (g/10 min) (final) | 0.6 | 1.3 | 0.85 |
| $MFR_{21}$ (g/10 min) | 22.6 | 38.7 | 19.3 |
| $MFR_{21}/MFR_2$ | 40.4 | 29.8 | 22.7 |
| Density (kg/m$^3$) | 916.4 | 912.7 | 920.3 |
| C4 content (wt%) | 0.9 | 0.5 | 0.3 |
| C6 content (wt%) | 8.4 | 10.9 | 7.5 |

**Comparative mLLDPE (mLLDPE-CE):**

**Table 3:** polymerization conditions for comparative mLLDPE

| | **mLLDPE-CE** |
|---|---|
| **Prepoly reactor** | |
| Catalyst | CAT1 |
| Catalyst feed (g/h) | 34 |
| Temp. (°C) | 50 |
| Press. (kPa) | 5707 |
| C2 (kg/h) | 4.0 |
| H2(g/h) | 0.04 |
| C4 (g/h) | 68.8 |
| Split (wt%) | 3.6 |
| **loop 1 Fraction (A-1)** | |
| Temp. (°C) | 85 |
| Press. (kPa) | 5450 |
| C2 conc. (mol%) | 2.6 |
| H2/C2 ratio (mol/kmol) | 0.49 |
| C4/C2 ratio (mol/kmol) | 53.9 |
| Split (wt%) | 18.5 |
| Density (kg/m3) of loop 1 material (fraction (A-1)) | 936.6 |
| MFR2 (g/10 min) of loop 1 material (fraction (A-1)) | 4.8 |
| **loop 2 Fraction (A-2)** | |
| Temp. (°C) | 85 |
| Press. (kPa) | 5265 |
| C2 conc. (mol%) | 3.1 |
| H2/C2 ratio (mol/kmol) | 0.4 |
| C4/C2 ratio (mol/kmol) | 52.0 |
| Split (wt%) | 21.1 |
| Density (kg/$m^3$) after loop 2 (component (A)) | 936.1 |
| $MFR_2$ (g/10 min) after loop 2 (component (A)) | 6.1 |
| $MFR_2$ (g/10 min) of loop 2 material (fraction (A-2)) | 7.8 |
| Density (kg/$m^3$) of loop 2 material (fraction (A-2)) | 935.6 |
| **GPR** | |
| Temp. (°C) | 75 |
| Press. (kPa) | 2000 |
| H2/C2 ratio (mol/kmol) | 1.21 |
| C4/C2 ratio (mol/kmol) | 61.79 |
| Split (wt%) | 56.8 |
| $MFR_2$ (g/10 min) of GPR material (Component (B)) | 0.4 |
| Density (kg/$m^3$) of GPR material (Component (B)) | 897.7 |

The polymers were mixed with 2400 ppm of Irganox B561 and 270 ppm of Dynamar FX 5922 compounded and extruded under nitrogen atmosphere to pellets by using a JSW extruder so that the SEI was 230 kWh/kg and the melt temperature 250°C.

**Table 4** Properties of comparative mLLDPE

| Material | mLLDPE-CE |
|---|---|
| $MFR_2$ (g/10 min) | 1.2 |
| $MFR_{21}$ (g/10 min) | 34.0 |
| $MFR_{21}/MFR_2$ | 28.3 |
| Density (kg/m$^3$) | 914.3 |
| C4 content (wt%) | 8.4 |
| C6 content (wt%) | 0 |

**HDPE:**

HDPE (a): a trimodal HDPE produced with Catalyst A prepared according to Example 1 of EP 1378528 A1 in a pilot plant, with a configuration of prepolymerization- loop - gas phase reactor, having $MFR_2$ of 0.7 g/10min, density of 959.9 kg/m$^3$. It was pelletized with 1000 ppm of Irganox B561 (BASF) and 400 ppm of Ceasit SW (Baerlocher) as antioxidants and acid scavenger, respectively on a twin screw extruder.

Production details are presented in Table 5 below.

HDPE (b): a bimodal HDPE produced with a ZN catalyst (as disclosed in Example 1 in EP 1378528), in a pilot plant, with a configuration of prepolymerization- loop - gas phase reactor, having $MFR_2$ of 0.7 g/10min, density of 959.5 kg/m$^3$. It was pelletized on a twin screw extruder with 1000 ppm of Irganox B561 (a 1:4 mixture of Irganox 1010 and Irgafos 168, produced by BASF) and 1000 ppm Calsium stearate (CEASIT FI, supplied by Baerlocher). Production details are presented in Table 5 below.

HDPE (c) for CE2: a bimodal HDPE produced with a ZN catalyst (as disclosed in EP 2994506B1), in a pilot plant, with a configuration of prepolymerization- loop - gas phase reactor, having $MFR_2$ of 0.8 g/10min, density of 955. 5 kg/m$^3$. It was pelletized with 500 ppm Irganox 1010 (supplied by BASF), 2000 ppm Irgafos 168 (supplied byBASF), 500 ppm Calcium stearat (CEASIT FI, supplied by Baerlocher) on a twin screw extruder. Production details are presented in Table 5 below.

**Table 5:** Polymerization conditions for HDPEs

| | HDPE (a) | HDPE (b) | HDPE (c)/CE2 |
|---|---|---|---|
| **Prepoly** | | | |
| Catalyst feed (g/h) | 32 | 33 | 32 |
| Temp. (°C) | 70 | 70 | 70 |
| Press. (bar) | 58 | 64 | 57 |
| H2 (g/h) | 5.0 | 2.0 | 5.0 |
| C2 kg/h) | 2.0 | 2.0 | 2.0 |
| C4 (g/h) | 80 | 80 | 80 |
| Split (wt%) | 1.7 | 1.7 | 1.7 |
| **Loop reactor -1** | | | |
| Temp. (°C) | 95 | 95 | 95 |
| Press. (bar) | 55 | 64 | 55 |
| C2 conc. (mol%) | 4.4 | 2.8 | 3.5 |
| H2/C2 (mol/kmol) | 258 | 456 | 430 |
| C4/C2 (mol/kmol) | 10.9 | 8.0 | 9.2 |
| Density (kg/m$^3$) | 964 | 972 | 970 |
| split % | 17.4 | 43.7 | 47.3 |

(continued)

| | | | |
|---|---|---|---|
| **Loop reactor -1** | | | |
| $MFR_2$ (g/10 min) | 184 | 280 | 350 |
| **Loop reactor - 2** | | Not used | Not used |
| Temp. (°C) | 95 | | |
| Press. (bar) | 53 | | |
| C2 conc. (mol%) | 2.8 | | |
| H2/C2 (mol/kmol) | 406 | | |
| C4/C2 (mol/kmol) | 14 | | |
| Density (kg/$m^3$) | 970 | | |
| split % | 25.9 | | |
| $MFR_2$ (g/10 min) | 320 | | |
| Density of fraction (C-2) (kg/$m^3$) | 974 | | |
| $MFR_2$ of fraction (C-2) (g/10 min) | 478 | | |
| **GPR** | | | |
| Temp. (°C) | 85 | 85 | 85 |
| Press. (bar) | 20 | 20 | 20 |
| H2/C2 (mol/kmol) | 113 | 110 | 110 |
| C4/C2 (mol/kmol) | 14.1 | 18.8 | 25.0 |
| split % | 55.0 | 55.0 | 51.0 |
| **Pellet** | | | |
| Density (kg/$m^3$) | 959.5 | 959.5 | 955.5 |
| $MFR_2$ (g/10 min) | 0.74 | 0.70 | 0.8 |
| $MFR_{21}$ (g/10 min) | 45.0 | 42.0 | 47.4 |
| $MFR_{21}/MFR_2$ | 60.8 | 60.0 | 59.2 |
| Mz (g/mol) | 705000 | 697000 | 708000 |
| Mz/Mw | 5.2 | 5.2 | 5.6 |
| $MFR_2$ in GPR (g/10 min) | 0.005 | 0.005 | 0.002 |
| Density in GPR (kg/$m^3$) | 948 | 949 | 941.6 |

**Monolayer blown films**

The above produced mLLDPEs were blended with HDPE directly on the film extrusion line. The following films have been produced with the above described method (film sample preparation).

For Comparative Example CE3: Lumicene® Supertough 40ST05,metallocene polyethylene provided by Total; density 940 kg/$m^3$, $MFR_2$ 0.5 g/10 min.

**Table 6:** Inventive and Comparative Films

| | | IE1 | IE2 | IE3 | IE4 | IE5 | CE1 | CE2 | CE3 40ST05 |
|---|---|---|---|---|---|---|---|---|---|
| mLLDPE1 | wt% | 10 | 45 | | | 45 | | | |
| mLLDPE2 | wt% | | | 45 | | | | | |

(continued)

| | | IE1 | IE2 | IE3 | IE4 | IE5 | CE1 | CE2 | CE3 40ST05 |
|---|---|---|---|---|---|---|---|---|---|
| mLLDPE3 | wt% | | | | 45 | | | | |
| mLLDPE-CE | wt% | | | | | | 45 | | |
| HDPE (a) | w% | | | | | 55 | | | |
| HDPE (b) | wt% | 90 | 55 | 55 | 55 | | 55 | | |
| HDPE (c) | wt% | | | | | | | 100 | |
| | | | | | | | | | |
| blend | | | | | | | | | |
| density | $kg/m^3$ | 955.6 | 940.4 | 938.7 | 942.0 | 940.1 | 939.3 | | |
| $MFR_2$ | g/10 min | 0.73 | 0.65 | 0.97 | 0.82 | 0.68 | 0.97 | | |
| Tm | °C | 131.7 | 129.0 | 129.8 | 128.7 | 128.8 | 129.1 | 130.5 | 128.0 |
| | | | | | | | | | |
| Film properties | | | | | | | | | |
| TM/MD | MPa | 970 | 628 | 538 | 576 | 535 | 553 | 928 | 577 |
| TM/TD | MPa | 1218 | 793 | 674 | 720 | 671 | 669 | 1255 | 654 |
| Haze | % | 51.0 | 28.7 | 23.5 | 19.3 | 20.6 | 21.6 | 70.0 | 18.2 |
| DDI | g | 62 | 158 | 152 | 152 | 221 | 70 | <20 | 128 |
| OMA | | 1179 | 3457 | 3480 | 4536 | 5740 | 1792 | 265* | 4058 |
| *Calculated with DDI = 20 g | | | | | | | | | |

The data demonstrates that using the specific mLLDPEs, as described above, blended with the specific HDPEs leads to an improved stiffness/impact balance.

CE1 is a blend of HDPE with a bimodal copolymer (C2/C4), which shows in principle good properties, but clearly worse than blends with 45.0 wt% of the specific trimodal terpolymers with the specific HDPEs (IE2 to IE5).

CE2 is a pure bimodal ZN catalysed HDPE, which has clearly worse properties than all inventive examples in view of haze, DDI and OMA.

CE3 is a pure metallocene catalysed copolymer, which has worse properties; especially DDI and OMA, than IE4 and IE5, with comparable haze and tensile modulus. Compared to IE2 and IE3 haze of CE3 is a little bit better, but stiffness/impact balance is improved in IE2 and IE3. IE1 has clearly increased stiffness (TM) compared to CE3.

## Claims

**1.** A polyethylene blend comprising

a) 1.0 wt% to 49.0 wt%, based on the total weight of the polyethylene blend, of a multimodal metallocene catalysed linear low density polyethylene (mLLDPE) which consists of an in-situ blend of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density (ISO 1183) in the range of 925 to 965 $kg/m^3$,
a $MFR_2$ (190°C, 2.16 kg, ISO 1133) in the range of 1.0 to 400.0 g/10 min;

the ethylene-1-hexene polymer component (B) has

a density (ISO 1183) in the range of 880 to 915 kg/$m^3$,
a $MFR_2$ (190°C, 2.16 kg, ISO 1133) in the range of 0.001 to 1.0 g/10 min;

whereby the multimodal metallocene catalysed linear low density polyethylene (mLLDPE) has

a density (ISO 1183) in the range of 910 to 925 kg/$m^3$,
a $MFR_2$ (190°C, 2.16 kg, ISO 1133) in the range of 0.1 to 2.5 g/10 min, and

b) 99.0 to 49.0 wt%, based on the total weight of the polyethylene blend, of a multimodal high density polyethylene, produced in the presence of a Ziegler-Natta catalyst (znHDPE), whereby said znHDPE has

a density (ISO 1183) in the range of 945 to 975 kg/$m^3$,
a $MFR_2$ (190°C, 2.16 kg, ISO 1133) in the range of 0.1 to 2.0 g/10 min, and

whereby the blend has

a density (ISO 1183) in the range of 930 to 965 kg/$m^3$,
a $MFR_2$ (190°C, 2.16 kg, ISO 1133) in the range of 0.1 to 1.5 g/10 min,
a melting temperature (Tm) (measured by DSC as described in the description) in the range of 120 to 135°C.

**2.** The polyethylene blend according to claim 1, wherein the polyethylene blend comprises

a) 1.0 to 20.0 wt%, based on the total weight of the polyethylene blend, of the multimodal metallocene catalysed linear low density polyethylene (mLLDPE), and
b) 99.0 to 80.0 wt%, based on the total weight of the polyethylene blend, of the multimodal high density polyethylene, produced in the presence of a Ziegler-Natta catalyst (znHDPE), whereby the blend has
a density (ISO 1183) in the range of 948 to 965 kg/$m^3$,
a $MFR_2$ (190°C, 2.16 kg, ISO 1133) in the range of 0.1 to 1.5 g/10 min,
a melting temperature (Tm) (measured by DSC as described in the description) in the range of 120 to 135°C.

**3.** The polyethylene blend according to claim 1, wherein the polyethylene blend comprises

a) 21.0 to 49.0 wt%, based on the total weight of the polyethylene blend, of the multimodal metallocene catalysed linear low density polyethylene (mLLDPE), and
b) 79.0 to 51.0 wt%, based on the total weight of the polyethylene blend, of the multimodal high density polyethylene, produced in the presence of a Ziegler-Natta catalyst (znHDPE), whereby the blend has
a density (ISO 1183) in the range of 930 to 947 kg/$m^3$,
a $MFR_2$ (190°C, 2.16 kg, ISO 1133) in the range of 0.1 to 1.5 g/10 min,
a melting temperature (Tm) (measured by DSC as described in the description) in the range of 120 to 135°C.

**4.** The polyethylene blend according to any of the preceding claims, wherein in the multimodal metallocene catalysed linear low density polyethylene (mLLDPE) the ethylene-1-butene polymer component (A) consists of an ethylene polymer fraction (A-1) and an ethylene polymer fraction (A-2),

wherein the density (ISO 1183) of fractions (A-1) and (A-2) is in the range of 925 to 965 kg/$m^3$, preferably of 930 to 955 kg/$m^3$, more preferably of 935 to 950 kg/$m^3$, and
the $MFR_2$ (190°C, 2.16 kg, ISO 1133) of fractions (A-1) and (A-2) is in the range of 1.0 to 1000.0 g/10 min, preferably of 2.0 to 550.0 g/10 min, more preferably of 3.0 to 250.0 g/10 min, even more preferably of 3.5 to 80.0 g/10 min, and
wherein the density and/or the $MFR_2$ (190°C, 2.16 kg, ISO 1133) of ethylene polymer fractions (A-1) and (A-2) may be the same or may be different.

**5.** The polyethylene blend according to any of the preceding claims, wherein in the multimodal metallocene catalysed linear low density polyethylene (mLLDPE)

- the ethylene polymer component (A) has a $MFR_2$ (190°C, 2.16 kg, ISO 1133) in the range of 2.0 to 250.0 g/10 min, preferably of 3.0 to 150.0 g/10 min, more preferably of 3.5 to 80.0 g/10 min and/or
- the ethylene polymer component (B) has a $MFR_2$ (190°C, 2.16 kg, ISO 1133) in the range of 0.005 to 0.9 g/10

min, preferably of 0.008 to 0.8 g/10 min and more preferably of 0.01 to 0.7 g/10 min.

**6.** The polyethylene blend according to any of the preceding claims, wherein in the multimodal metallocene catalysed linear low density polyethylene (mLLDPE) the ratio of the $MFR_{21}$ (190°C, 21.6 kg, ISO 1133) to $MFR_2$ (190°C, 2.16 kg, ISO 1133), $MFR_{21}/MFR_2$ is in the range of 15 to 60, preferably 18 to 55, more preferably 20 to 50 and even more preferably 20 to 45.

**7.** The polyethylene blend according to any of the preceding claims, wherein the znHDPE has a $MFR_2$ (190°C, 2.16 kg, ISO 1133) in the range of 0.2 to 1.8 g/10 min, preferably in the range of 0.3 to 1.5 g/10 min, more preferably in the range of 0.4 to 1.0 g/10min and
a density (ISO1183) in the range of 950 to 972 kg/m$^3$, preferably in the range of 952 to 970 kg/m$^3$, more preferably in the range of 954 to 968 kg/m$^3$ and still more preferably in the range of 958 to 965 kg/m$^3$.

**8.** The polyethylene blend according to any of the preceding claims, wherein the znHDPE has a number average molecular weight Mz in the range of 300,000 to 1,000,000 g/mol, preferably of 500,000 to 900,000 g/mol and more preferably of 550,000 to 750,000 and a molecular weight distribution Mz/Mw of from 1 to 10, preferably from 3 to 7, and most preferably from 4 to 5.5, Mz, Mw being determined by GPC as described in the experimental part.

**9.** The polyethylene blend according to any of the preceding claims, wherein the multimodal znHDPE comprises at least

(i) 30 to 70 wt%, relative to the total weight of the multimodal znHDPE, of a polyethylene component (C) with a density (ISO 1183) in the range of 955 to 980 kg/m$^3$ and an $MFR_2$ (190°C, 2.16 kg, ISO 1133) in the range of 50 to 1000 g/10 min; and
(ii) 30 to 70 wt%, relative to the total weight of the multimodal znHDPE, of a polyethylene component (D) with a density (ISO 1183) in the range of 935 to 965 kg/m$^3$ and an $MFR_2$ (190°C, 2.16 kg, ISO 1133) in the range of 0.0001 to 0.5 g/10 min.

**10.** The polyethylene blend according claim 8, wherein the multimodal znHDPE is a bimodal znHDPE consisting of polyethylene component (C) and of polyethylene component (D), wherein

the polyethylene component (C) has a $MFR_2$ (190°C, 2.16 kg, ISO 1133) in the range of 100 to 900 g/10min, preferably in the range of 150 to 800 g/10min, more preferably in the range of 200 to 600 g/10min and still more preferably in the range of 250 to 500 g/10 min and
a density (ISO 1183) in the range of 960 to 980 kg/m$^3$, preferably of 965 to 978 kg/m$^3$ and even more preferably of 968 to 975 kg/m$^3$; and
the polyethylene component (D) has a $MFR_2$ (190°C, 2.16 kg, ISO 1133) in the range of 0.0005 to 0.5 g/10min, preferably of 0.0008 to 0.1 g/10min and more preferably of 0.001 to 0.05 g/10 min and a density (ISO 1183) in the range of 940 to 955 kg/m$^3$ and more preferably of 945 to 952 kg/m$^3$.

**11.** The polyethylene blend according claim 8, wherein the multimodal znHDPE is a trimodal znHDPE consisting of an in-situ blend of

(iii) 35.0 to 60.0 wt% of a high density polymer component (C) consisting of

30.0 to 70.0 wt% of a high density fraction (C-1) and
70.0 to 30.0 wt% of a high density fraction (C-2), and

(i-v) 65.0 to 40.0 wt% of a lower density polymer component (D),
whereby the high density polymer component (C) has

a density (ISO 1183) in the range of 950 to 980 kg/m$^3$,
a $MFR_2$ (190°C, 2.16 kg, ISO 1133) in the range of 150.0 to 1000.0 g/10 min;

the high density fraction (C-1) has

a density (ISO 1183) in the range of 950 to 980 kg/m$^3$,
a $MFR_2$ (190°C, 2.16 kg, ISO 1133) in the range of 10.0 to 400.0 g/10 min, and

the high density fraction (C-2) has

a density (ISO 1183) in the range of 950 to 980 kg/m$^3$,
a $MFR_2$ (190°C, 2.16 kg, ISO 1133) in the range of 100.0 to 2000.0 g/10 min,
the $MFR_2$ of fraction (C-2) being higher than the $MFR_2$ of fraction (C-1); and

the lower density polymer component (D) has

a density (ISO 1183) in the range of 940 to 970 kg/m$^3$,
a $MFR_2$ (190°C, 2.16 kg, ISO 1133) in the range of 0.0001 to 0.5 g/10 min,
the density of polymer component (D) being lower than the density of polymer component (C).

**12.** The polyethylene blend according to any of the preceding claims, wherein the polyethylene blend has a density (ISO 1183) in the range of 932 to 960 kg/m$^3$, preferably in the range of 935 to 958 kg/m$^3$, and a $MFR_2$ (190°C, 2.16 kg, ISO 1133) in the range of 0.3 to 1.3 g/10 min, preferably in the range of 0.4 to 1.1 g/10 min.

**13.** Use of the polyethylene blend according to any of the preceding claims for the preparation of a monolayer blown film.

**14.** A monolayer blown film comprising a polyethylene blend according to any of the preceding claims 1 to 12, wherein the film has an optomechanical ability (OMA) according to formula (III):

$$OMA = \frac{Tensile\ Modulus\ (MD)[MPa]*DDI\ [g]}{Haze\ (40\ \mu m)[\%]} \quad (III)$$

of at least 800 [MPa*g/%] up to 10000 [MPa*g/%], preferably in the range of from 1000 [MPa*g/%] up to 8000 [MPa*g/%], more preferably in the range of from 2000 [MPa*g/%] up to 65000 [MPa*g/%], wherein the Tensile Modulus in machine direction is measured according to ISO 527-3 at 23°C on 40 μm test blown films , DDI is the dart-drop impact strength determined according to ISO 7765-1 on a 40 μm test blown film and haze is measured according to ASTM D1003 on a 40 μm test blown film.

**15.** Use of a film according to claim 14 as packaging material, in particular as a packaging material for food or as a layer in multilayer polyethylene based blown films, preferably as core layer in multilayer polyethylene based blown films.

Europäisches Patentamt
European Patent Office
Office européen des brevets

# EUROPEAN SEARCH REPORT

Application Number
EP 23 15 6589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 116 359 A1 (BOREALIS AG [AT]) 11 January 2023 (2023-01-11) * mLLDPE-1, mLLDPE-3; paragraphs [0001] - [0004], [0011] - [0015]; examples 4,5; tables 1,2,4 * ----- | 1-15 | INV. C08F2/00 C08J5/18 C08L23/08 |
| A | EP 1 319 685 A1 (ATOFINA RES [BE]) 18 June 2003 (2003-06-18) * paragraphs [0020], [0025]; claims; examples * ----- | 1-15 | |
| A | US 2014/058039 A1 (DEWACHTER DAAN [BE] ET AL) 27 February 2014 (2014-02-27) * the whole document * ----- | 1-15 | |

TECHNICAL FIELDS SEARCHED (IPC)

C08F
C08J
C08L

The present search report has been drawn up for all claims

| Place of search | Date of completion of the search | Examiner |
|---|---|---|
| Munich | 11 July 2023 | Iraegui Retolaza, E |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 15 6589

This annex lists the patent family members relating to the patent documents cited in the above-mentioned European search report. The members are as contained in the European Patent Office EDP file on
The European Patent Office is in no way liable for these particulars which are merely given for the purpose of information.

11-07-2023

| Patent document cited in search report | Publication date | Patent family member(s) | Publication date |
|---|---|---|---|
| EP 4116359 A1 | 11-01-2023 | EP 4116359 A1 | 11-01-2023 |
| | | WO 2023280799 A1 | 12-01-2023 |
| EP 1319685 A1 | 18-06-2003 | AT 353923 T | 15-03-2007 |
| | | AU 2002361404 A1 | 30-06-2003 |
| | | CN 1604920 A | 06-04-2005 |
| | | DE 60218224 T2 | 22-11-2007 |
| | | EP 1319685 A1 | 18-06-2003 |
| | | EP 1470166 A1 | 27-10-2004 |
| | | JP 2005511868 A | 28-04-2005 |
| | | KR 20040068937 A | 02-08-2004 |
| | | US 2005119413 A1 | 02-06-2005 |
| | | WO 03051937 A1 | 26-06-2003 |
| US 2014058039 A1 | 27-02-2014 | CN 103502349 A | 08-01-2014 |
| | | EP 2681273 A1 | 08-01-2014 |
| | | ES 2648297 T3 | 29-12-2017 |
| | | HU E036598 T2 | 30-07-2018 |
| | | PL 2681273 T3 | 31-01-2018 |
| | | PT 2681273 T | 14-11-2017 |
| | | US 2014058039 A1 | 27-02-2014 |
| | | WO 2012119954 A1 | 13-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022018239 A
- WO 2019229209 A1
- WO 1994025523 A1
- WO 2016198273 A
- WO 2021009189 A
- WO 2021009190 A
- WO 2021009191 A
- WO 2021009192 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- EP 1378528 A
- EP 2994506 B1


### Non-patent literature cited in the description


- **IUPAC.** *Nomenclature of Inorganic Chemistry,* 1989
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253